# EUROPEAN PATENT APPLICATION

(11) **EP 2 665 024 A1**
(43) Date of publication of application: **20.11.2013**
(21) Application number: 12168317.1
(22) Date of filing: 16.05.2012
(51) Int. Cl.: G06Q 20/00, H04M 15/00

(54) **Network transactions**

(71) Applicant: Symmetric Transactions AG, 6304 Zug (CH)
(72) Inventor: Vines, Peter, London, Greater London W1B 1PE (GB); Seidel, Carlo, London, Greater London W1B 1PE (GB)
(74) Representative: Thorniley, Peter

(57) **Abstract**

A system and method which enable online network participants to enter into transactions with each other are provided. Accounts are maintained for first and second network participants, and an authentication token is generated that is associated with the account of the first network participant. The first network participant may use the authentication token in a transaction request, and the transaction request can then be applied to the accounts of both participants.

## Description

### Field of the Invention

The present invention relates to the ability of online network participants to enter into transactions with each other. In particular, but not exclusively, the present invention relates to the ability to allow single and multiple online valuations, transactions and payments to take place individually or simultaneously without active participant intervention between participants who are consuming and/or providing data, applications, content, goods or services.

### Background to the Invention

One of the driving forces behind the commercial development and exploitation of the internet has been disintermediation. This is the concept of: (i) reducing the role of intermediaries in transactions; and (ii) increasing direct transactions and interaction between consumers and providers of goods and services, thereby allowing the ultimate parties to interact more efficiently.

A common example of disintermediation might be in the field of travel bookings. Whereas it was once conventional for a potential holidaymaker to consult with a travel agent to obtain information regarding potential options for booking flights and accommodation and then make their booking via the agent, this information is now easily accessible directly from the airlines and hotels (and also in an aggregated form at comparison websites and the like) and the booking process can equally easily take place between the service provider and the holidaymaker directly. In this way, a customer is able to interact directly with a provider of goods or services without the need for intermediary, third party expertise to make the transaction.

However, this concept has as yet only been extended so far. For example, the principal model by which much online content and services are supported, and delivered free to consumers, is advertising. Although other models exist, such as one-off or subscription user payment models, advertising in most cases remains the primary or a significant contributor to the financial sustainability of online businesses. Despite the general trend towards disintermediation, the advertising model of supporting online content and services can itself be understood as an example of an intermediary being required between the ultimate parties of an online transaction.

In particular, advertisers desire knowledge about and the attention of individual consumers, and are willing to provide payment for such information and attention. The better the knowledge that advertisers have about consumers the more they are able to focus/tailor their messages and increase effectiveness and efficiency. However, under existing online models advertisers are unable to engage with the ultimate user directly. Instead, advertisers are obliged to contract with a third party who will draw the user in, harvest their information and maintain their attention by providing some content or service that is of interest to the user. This third party might be a search engine, a social networking site, or a content provider, but in every case acts as an intermediary between the advertiser and the user.

Indeed, this approach is not dissimilar to the manner in which such transactions are executed offline. In the offline world, an advertiser or data researcher may engage a third party, such as a newspaper, a billboard owner or a broadcasting station and pay them each time the commercial is aired or displayed on a board or in printed editions. The advertiser seeks to engage with viewers or readers whose identity is unknown to the advertiser. In this particular respect therefore the growth of the online world and disintermediation have not fundamentally changed advertisers' business models - basically consumers are reached through intermediaries both in the offline and online worlds.

The above is just one example of a business model that has failed to develop significantly with the advent of the online age. One reason that the relationships between parties involved in online transactions have failed to progress is because existing technology does not allow potential counter-parties who do not know each other to interact and engage in transactions with each other. Instead, an advertiser must engage with a third party, such as a search engine, to pay each time their advertisement is displayed (or on some comparable contractual basis). This is possible because the identity of the third party is known and consistent. However, the advertiser does not know anything about the individual end consumers who will be served the advertisement, and different end consumers may see the advertisement each day. For this reason, it is impossible for the advertiser to provide rewards directly to the end user.

This limitation on the interaction between advertisers and consumers is indicative of a general inhibition on transactions between parties that are unknown to each other across the internet. Whereas in the physical world, a degree of trust in a transaction between strangers is established through physical presence and the exchange of physical goods and or services, transactions that occur online require layers of security to establish trust between parties. This has a particularly inhibiting effect in areas such as advertising, in which the individual transaction size is relatively low although the cumulative value of all transactions is high.

There is therefore an ongoing need to improve the possibilities for interactions between parties to online activities.

### Summary of the Invention

According to a first aspect of the present invention, there is provided a computer-implemented method for facilitating online transactions, comprising:
maintaining a first account for a first network participant;
maintaining a second account for a second network participant;
generating an authentication token associated with the first account;
transmitting the authentication token to a network device;
receiving a transaction request from the network device, wherein the transaction request comprises details of the desired transaction, the authentication token and identifies the second account; and
applying the transaction request to the first and second accounts using the authentication token.

The present invention provides an environment in which multiple transactions between parties can be implemented directly, quickly and efficiently, without involved or cumbersome procedures inhibiting interaction between network participants. At the same time, the present invention can be used to maintain visibility and security for transactions. At any time, a first network participant may initiate one or more transactions that can be applied to accounts maintained for network participants participating in the transaction(s). An authentication token is provided to the first network participant that can be used to initiate transactions with another network participant. The token can provide the necessary identification and security so that at the point of the transaction the first network participant does not need to input further information or undergo security checks.

Accordingly, the present invention can enable a non-disruptive, friction-free, seemingly instantaneous and transparent transaction and payment environment, in which parties with no knowledge of each other are able to enter into multiple transactions and payments with each other without interrupting existing activities to identify themselves, and which transactions and payments can take place continually in the background (and with multiple counter parties at any time) without interrupting network participant activities. For example, as a user browses the internet, uses online services or an application on a mobile device connected to the internet, they perform certain actions (viewing pages, selecting links and so on). According to the present invention, these actions themselves can be sufficient to initiate transactions - for example, to pay for content they are viewing or interacting with, or to receive payment for engaging with advertising. The present invention requires no additional steps to be undertaken to enter into such a transaction. For example, when a user clicks on a link, or selects an action in any other way, this may automatically cause a transaction request to be generated and a transaction to take place.

The transaction request may be a payment request, and the step of applying the transaction request may comprise authorising the payment request. A payment request can transfer funds from the first account to the second account. The step of authorising the payment request may be used to control the application of such a transfer. For example, authorising the payment request may comprise comparison of a payment amount with a balance of the first account. Thus, if the balance of the user account is not sufficient to cover the payment amount, the transaction may not be authorised.

In preferred embodiment, the method may further comprise setting one or more authorisation limits, wherein authorising the payment request comprises ensuring the payment request does not exceed the authorisation limits. The authorisation limits may be automatically generated but in preferred embodiments may be set by the first network participant. For example, the limits may be received from the network device.

The authorisation limits may comprise at least one of temporal limits, rate limits and quantity limits, for example. As such, transactions may be allowed for a period of time defined by temporal limits and/or up to a certain value defined by quantity limits. Alternatively or additionally, rate limits could be set such that transactions may be allowed at a rate of a certain value for a certain period of time. Other types of limits may also be applied, which may depend on other criteria such as a current account balance or the nature of the transaction request. For example, the authorisation limits may depend upon the identity of the second network participant. By using authorisation limits, an element of security may be provided without requiring ad hoc authentication of the first network participant for each transaction. Instead, the first network participant may be authenticated in order to set the transaction limits, allowing a stream of transactions to continue within the defined limits.

By allowing the network participant to set or control authorisation limits which apply across multiple transactions, the network participant remains in complete control of their transaction activity while experiencing the process of making transactions as being without interruption, disruption or other friction which would otherwise arise each time a transaction occurs. In this manner, the ability of the transaction environment to bring about convenience for the network participants while retaining their trust is increased.

In preferred embodiments, the method further comprises generating an authorisation token and transmitting the authorisation token to the client terminal, wherein the transaction request comprises the authorisation token. The authorisation token can, for example, reflect the authorisation limits and thus be used to enforce those limits in an efficient and effective manner. In some embodiments, the authorisation token can alternatively or additionally be used as an additional layer of security. For example, the method may comprise a step of verifying the authorisation limits within the authorisation token. If the authorisation limits in the authorisation token do not match, for example, authorisation limits stored elsewhere, the authorisation token may not be verified in which case the transaction request will not be authorised.

Preferably, the first network participant is able to set the authorisation limits. For example, in particularly preferred embodiments, the method may comprise receiving authorisation limits from the network device. Further the method may comprise generating the authorisation token in response to receiving the authorisation limits from the network device. In particularly preferred embodiments, the authorisation limits are received securely from the network device (for example, by implementing a security test before they are accepted) and thus the authorisation token may itself be considered secure.

In preferred embodiments, the payment request is generated in response to selection of a desired interaction and the method further comprises enabling the desired interaction if the payment request is authorised. Thus, the method may be used to allow payment for certain interactions without requiring any active intervention from either network participant beyond the first network participant's selection of that interaction. In some preferred embodiments, the desired interaction is with an application executing at the network device. For example, the application may be a web browser, and the first network participant may select a particular hyperlink in a web page. Access to the content at the URL indicated by the hyperlink can be enabled only if the payment request is authorised. In this way, the first network participant can make a payment to the second network participant for internet content without interrupting the usual web browsing experience. In other embodiments, the application and/or the interaction may take alternative forms. For example, if the application were a game or a mobile app, it may require payments to be authorised for the network participant to access certain levels or features.

The desired interaction need not be tied to an application at the network device. For example, the use of utilities such as electricity, gas or water, may be dependent on successful authorisation of the payment request. For example, the desired interaction may be to use an appliance which requires one or more utilities, such as a shower or washing machine. The present invention can therefore automate the payment required for the utilities consumed during use of appliances of this kind. The transaction request may originate with a smart meter or other device that may control the delivery of the utility, or may originate with the appliance itself.

The transaction request may also be an earning request. An earning request is effective to transfer funds from the second network participant to the first network participant. That is, payment is made to the network participant initiating the transaction. Since both the first and second accounts are being maintained, it is possible to transfer funds in this direction as well as from the first to the second network participant. This symmetry in the operation of the invention provides advantageous flexibility to all parties.

For example, the earning request may be generated in response to interaction of an application operating at the network device with content associated with the second network participant. In this manner, a first network participant operating a network device such as a client terminal for instance may be encouraged to interact with certain content. For example, if the content is an advertisement, the first network participant may receive funds from the second network participant for viewing the advertisement, and may receive further funds for selecting the advertisement.

In preferred embodiment, the method further comprises maintaining a user profile for the first network participant, wherein the user profile reflects activity of the first network participant. For example, the user profile may be updated in response to the transaction request. The user profile may reflect transactions in which the first network participant has taken part. Such transactions may include those in which the first network participant has either made or received payment, or those in which no payment has occurred. The transaction request provides a reliable resource for recording such transactions and thus maintaining the user profile. The user profile can be utilised to optimise the transactions that subsequently occur. For example, transaction requests may be a response to one or more transaction opportunities presented to the first network participant in dependence on the user profile. As well as user activity, the user profile may reflect additional information such as user preferences.

Transaction opportunities may comprise advertisements delivered to a network participant according to that participant's user profile. These advertisements may present the opportunity to the network participant to earn rewards. The advertisements may be tailored to the network participant according to their user profile. This increases the value of such advertisements to the advertising network participant. However, unlike the existing model in which details of consumers are harvested by services such as email, social networking, or search in order to sell advertising opportunities at a premium and for the benefit of the providers of such services, with the present invention the benefit in value can be passed on to consumers, who may receive a greater reward for more tailored advertising. Transaction opportunities presented to a network participant may also depend on their preferences and/or other parameters such as their location at the time the transaction opportunity is presented, for example. For example, a network participant may set thresholds for the values of transaction opportunities that they are willing to accept. Alternatively, a network participant may look for transaction requests in a particular location, for example. A network participant may also have the opportunity to opt out of such earning transactions opportunities altogether by deciding not to accept advertising transactions and/or not to make their user profile available to participants who wish to use it for promotional purposes.

According to a second aspect of the present invention, there is provided a system for facilitating online transactions, comprising:
a transaction server arranged to maintain a first account for a first network participant and a second account for a second network participant, the transaction server being further arranged to generate an authentication token for the first network participant;
a network device arranged to receive the authentication token from the transaction server and to generate a transaction request comprising the authentication token and identifying the second account,
wherein, on receipt of a transaction request from the network device, the transaction server is arranged to apply the transaction request to the first and second accounts.

Preferred features of the first aspect may equally be applied to the second aspect.

It can be appreciated that the invention can be implemented using computer program code. Indeed, according to a further aspect of the present invention, there is therefore provided a computer program product comprising computer executable instructions for carrying out the method of the first aspect. The computer program product may be a physical storage medium such as a Read Only Memory (ROM) chip. Alternatively, it may be a disk such as a Digital Versatile Disk (DVD-ROM) or Compact Disk (CD-ROM). It could also be a signal such as an electronic signal over wires, an optical signal or a radio signal such as to a satellite or the like. The invention also extends to a processor running the software or code, e.g. a computer configured to carry out the method described above.

### Brief Description of the Figures

Preferred embodiments of the present invention will now be described with reference to the accompanying drawings, in which:
Figure 1 illustrates a system that may be used in accordance with a first embodiment of the present invention;
Figure 2 is a sequence diagram showing the process by which a network participant can pay for online content;
Figure 3A shows a browser window displayed to the user when the user is not logged into the network;
Figure 3B shows a browser window displayed to a user when the user is logged into the network;
Figure 3C shows a browser window displayed to a network participant when authorisation limits have been set;
Figure 4 is a sequence diagram showing the process by which a network participant can receive payment for interaction with online content; and
Figure 5 is a sequence diagram showing the process by which a network participant can pay for services provided within an application.

### Detailed Description

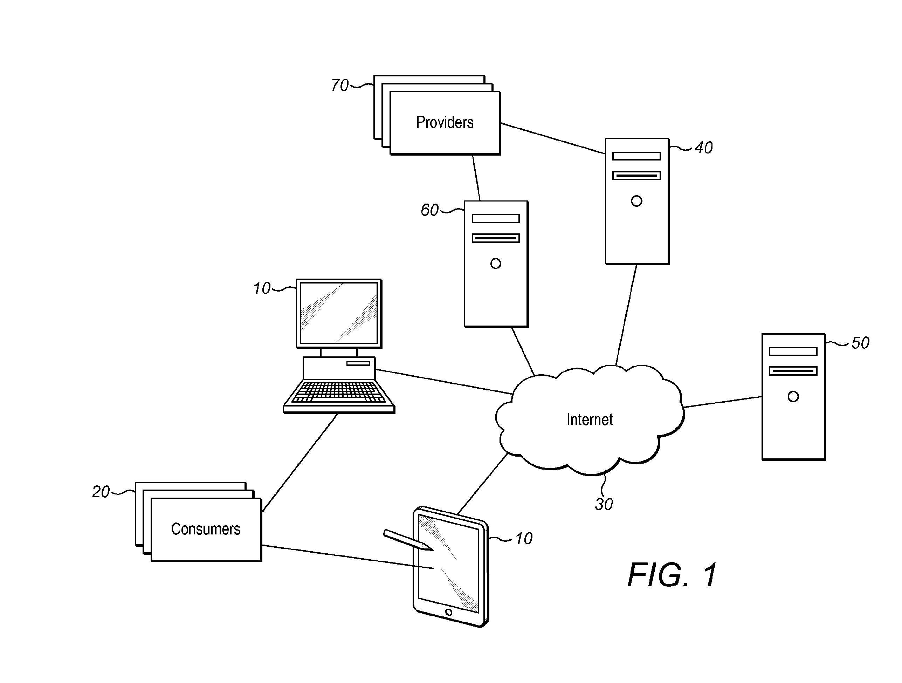

Referring to Figure 1, there is shown a system for use in the implementation of a preferred embodiment of the present invention. One or more network devices 10 are under the control of first network participants 20. The network devices 10 in this example are client terminals connected via a network 30 to a content server 40, an ad server 60 and a transaction server 50. The content server 40 and the ad server 60 are under the control of second network participants 70.

The first and second network participants 20, 70, or a single network participant may take both positions either simultaneously or at different times. The distinction is drawn in Figure 1 for convenience only, in order to allow description of a transaction between different network participants. To avoid ambiguity in the following discussion, the first network participants 20 will be referred to hereinafter as consumers 20 while the second network participants will be referred to hereinafter as providers 70. The consumers 20 may, for example, be individuals while the providers 70 may be economic entities, although this is not essential. By utilising the system of Figure 1, as will be described below, the consumers 20 can initiate transactions with the providers 70.

In the preferred embodiment, the consumers 20 are individuals operating client terminals 10 on which applications execute. Network devices such as the client terminals 10 may take various form factors and may have various capabilities. Client terminals 10 that may be used in accordance with the present invention include personal computers (PCs), laptops, mobile phones, tablet devices and internet-connected televisions. Client terminals are not limited to such examples, however, and may include other network-enabled appliances or devices. For example, the client terminal 10 may take a distributed form across a number of networked elements. The client terminals 10 preferably include user interfaces to allow the consumers 20 to interact with the client terminals 10 as appropriate. The user interface may take the form of a keyboard, remote control, pointing device, touchscreen or any other interface as appropriate. The client terminals 10 comprise a display which can be used to display, for example, web pages, applications, games, video and/or other content to the consumer 20. Applications executed by the client terminal 10 may include a web browser and one or more further network-connected applications.

The network 30 is typically the internet, although it may be any other suitable communications network allowing interaction between the client terminals 10 and other elements of the system.

The content server 40 and/or the ad server 60 may be conventional computing devices for use as network servers and may comprise a processing unit and a content store. These servers 40, 60 may further comprise a user interface for facilitating control of their functionality. The content server 40 and/or the ad server 60 are associated with the providers 70.

The providers 70 are typically economic entities, although they may be individuals or groups of individuals, who wish to engage in transactions with the consumers and/or each other. A provider 70 may be a content provider associated with the content stored on the content server 40 or may be an advertiser associated with advertisements stored on the ad server 60. The system of Figure 1 allows transactions to occur between these entities and the consumers 20, allowing consumers 20 to make payments to the providers 70, and moreover to receive payment from the providers 70. Consumers 20 and providers 70 may also engage in transactions which do not require payment (effectively, transactions in which the payment is zero) by utilising the system of Figure 1.

The transaction server 50 maintains accounts for each consumer 20 and for each provider 70. Maintaining the accounts comprises storing account details which may include identification information, such as account numbers, contact details, user names, passwords, and/or other data. The account details may also include an account balance which reflects the available amount in each account. Both consumers 20 and providers 70 may typically access the transaction server 50 via an online portal to manage their accounts, and in particular to add and withdraw funds to/from the account. This can be done using conventional payment mechanisms, such as via credit/debit card or online banking. Once funds have been placed in the consumer's or provider's account, they can be used for further transactions with other network participants within the system. The funds in the accounts held by the transaction server may be denominated in any appropriate unit, which may, for example, relate to currencies issued by national or regional authorities in a fixed manner. In the example described herewith, the unit in which the accounts are denominated is the "milli", which is defined to be equivalent to 1/1000^{th} of a United States dollar.

The transaction server 50 may also maintain a user profile for each consumer 20 that is associated with their account details. The user profile may reflect activity, particularly online activity, of the consumer 20. For example, the user profile may include details such as recent transactions made by the consumer 20 and/or earnings received by the consumer 20. In particular, the profile may provide details of transactions between the consumer 20 and providers 70 in the system. This can be implemented by updating the user profile in response to the transaction request. The consumer 20 may have control over what details of their transactions are stored in their user profile. Recording of these transactions may be limited to time periods during which the consumer 20 is logged in to the system. The user profile can be used, for example, to determine transaction opportunities offered to the consumer. For example, the consumer 20 may allow one or more providers 70 to view details of their user profile, and the provider may choose to display certain content to the consumer in dependence on the profile. Furthermore, the consumer 20 may store in their user profile details regarding the types of content they are interested in and/or the types of transactions they are willing to consider from providers 70. In this way, the profile can be used to ensure that consumers 20 only receive content and/or transaction opportunities that are appropriate given the transactions they are willing to consider.

In determining the transaction opportunities offered to a particular consumer 20, the user profile may be supplemented by other information. For example, transaction opportunities may depend on the time of day, the location of the consumer 20, the nature of the client device 10 and so on.

The transaction server 50 presents an application programming interface (API) accessible across the network 30. In this way, applications operating on the client terminals 10, content server 40 and ad server 60 can communicate with the transaction server 50 appropriately. For example, these entities, if suitably verified, can access the account details stored on the transaction server 50, or may initiate transactions by forwarding appropriate requests to the transaction server 50. If desired, consumers 20 may set limits on the sharing of their account details in this way. For example, a consumer 20 may define that in certain circumstances they are willing for identification information or other data from their account to be shared; this may depend on factors including the type of transaction (for example, a consumer 20 may be willing to share information if it is for a transaction in which they may earn a certain value) or the requesting party (i.e. they may be willing to share details with certain providers 70 but not others), or the location of the consumer 20 (for example if the consumer were using a mobile device as the client device 10 in a particular area).

Although each of the content server 40, the transaction server 50 and the ad server 60 are illustrated in Figure 1 as single entities, it will be appreciated that they may be implemented across a distributed range of devices. For example, the transaction server 50 may be implemented across a range of separate networked devices.

As well as transferring funds into the accounts managed by the transaction server 50, consumers 20 and providers 70 may also transfer funds from these accounts if they so wish. In this way, the consumer 20 or provider 70 may retrieve funds from the transaction server 50 to use in a conventional bank account that can be used for transactions outside of the system. In one implementation, a commission is taken each time funds are added to or removed from the accounts maintained by the transaction server 50 in order to cover the upkeep costs of the system.

So, the system includes a number of network participants (consumers 20 and providers 70) each of which have at least one account maintained by the transaction server 50. As a result, payments can be made directly between network participants in the system (i.e. without intermediaries) for goods and/or services (including content and data) by reconciling these in the accounts maintained by the transaction server 50.

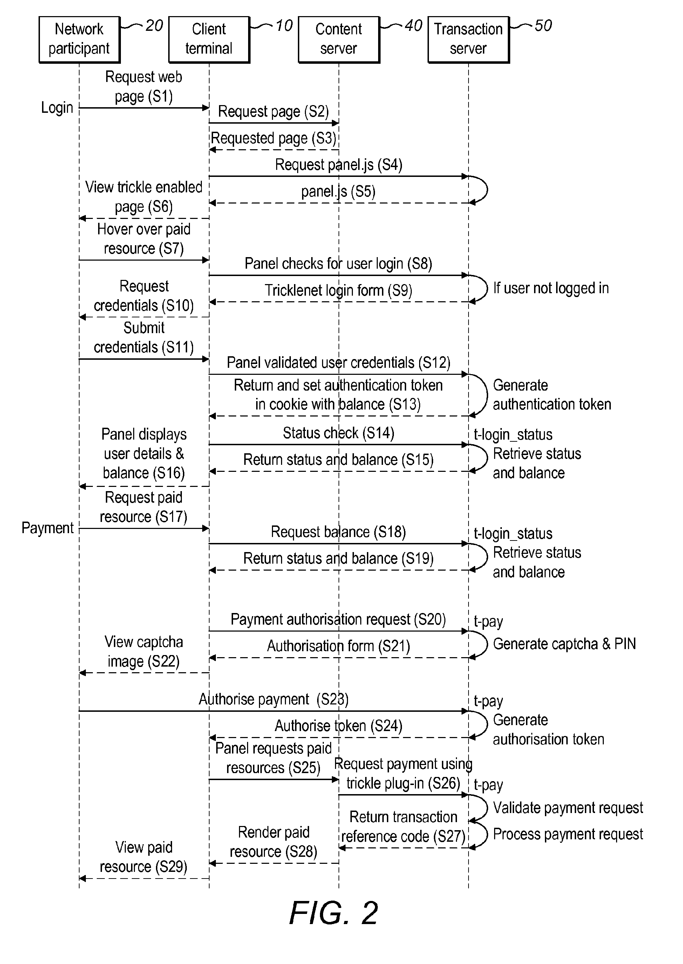

One example of a circumstance in which a transaction between a consumer 20 and a provider 70 may take place is that of the consumer 20 wishing to access premium content provided by the provider 70. In this context, premium content is content for which a charge is levied. Thus, for the consumer 20 to access such content a payment must be made from the consumer 20 to the provider 70. The process for facilitating such a payment, using the example of a transaction taking place through a web browser, is illustrated in Figure 2. A similar process can be used where the consumer 20 does not need to make a payment at all - the request for the content can nevertheless be treated as a transaction using the system of the present invention. There may, for example, be a commission paid for such a transaction by the consumer 20 and/or the provider 70, but which is not received by the other network participant.

Firstly, at step s1, the consumer 20 inputs a request for a web page to the client terminal 10 that they are operating. The client terminal 10 then retrieves the web page from the content server 40 in a conventional manner at steps s2 and s3. This web page is not itself premium content, but rather acts as a gateway or portal to that content, providing the consumer 20 with links to select in order to access the premium content.

The web page includes a reference to a JavaScript applet, such that when the browser operating at the client terminal attempts to render the web page it is instructed to retrieve this applet from the transaction server 50. Although in the preferred embodiment, the applet is in JavaScript, other appropriate programming languages and environments may be used. So, at step s4, the client terminal 10 requests the applet from the transaction server 50, and at step s5, the applet is returned to the client terminal 10. The web page is then rendered by the client terminal 10, including running the applet.

As the applet is stored centrally at the transaction server 50, it can be maintained and updated under the control of the transaction server 50. This avoids the potential fragmentation that might occur if individual content servers 40 or client terminals 10 retained their own software to carry out the tasks of the applet, although it is possible in other embodiments that such an approach may be adopted.

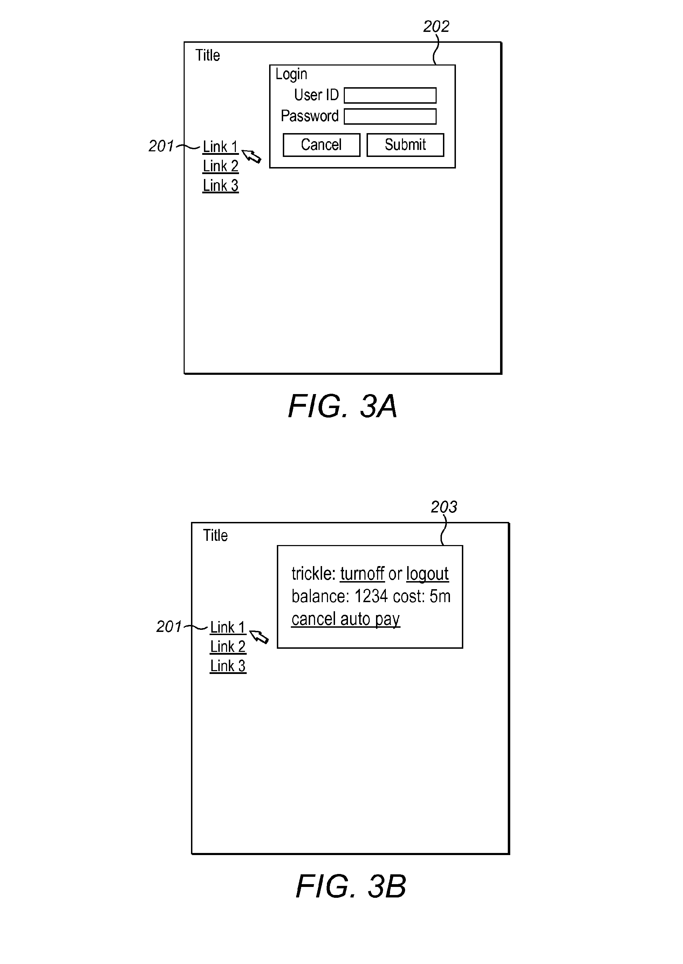

The consumer 20 is now able to view the web page retrieved from the content server 40, at step s6. An exemplary web page is illustrated in Figure 3A. The web page may include a link 201 to premium content offered by the provider 70. In one embodiment, the client terminal 10 is operated by a mouse or other pointing device, and when the cursor controlled by that pointing device is controlled to hover over the link to the premium content, at step s7, this is recognised by the applet. The applet then interrogates the transaction server 50, at step s8, to check whether the consumer 20 operating the client terminal 10 is logged in.

If the consumer 20 is not logged in, the transaction server 50 returns this information to the client terminal 10, at step s9.

At this point, the consumer 20 may be given the option to log in. This may be via an information panel 202 that appears adjacent to the link 201, as shown in Figure 3A. The information panel 202 may be displayed as the consumer 20 controls the pointing device to hover over the link and interacts with the panel by controlling the pointing device to click on the panel. The panel may disappear if it is not clicked on or the pointing device is no longer controlled to hover over the link. The consumer 20 may select to click on the panel 202 to log in. This will cause the client terminal to request credentials from the consumer 20, at step s10 and the consumer 20 may enter their credentials at step s11. Credentials may include a user name and password, for example.

At step s12, the credentials are then passed by the applet running at the client terminal 10 to the transaction server 50. The transaction server 50 verifies the user credentials and generates an authentication token. The authentication token may include details such as the IP address of the client terminal 10, a reference for the browser and/or applet, a reference to the device type and a network participant identifier. In general, the token is sufficient to identify the consumer 20, either directly through the incorporation of a user ID or indirectly through the incorporation of some detail which can be associated with a particular consumer 20.

The authentication token is then returned to the client terminal 10 at step s13, where it may be stored in, for example, a cookie. Preferably, the cookie is configured to expire on closure of the browser in which the applet is running, but may be configured to persist for a greater period if desired.

The authentication token can now be used by the client terminal 10 to identify the consumer 20 to the transaction server 50 and may be passed between the client terminal 10 and the transaction server 50 to convey information relating to the user's account to carry out transactions. For example, if the consumer 20 hovers again over the link 201, a request for balance information from the consumer's account may be sent to the transaction server 50, at step s14, and balance information may be returned to the client terminal 10 at step s15.

As well as allowing transactions to take place, the action of logging in by the consumer 20 can allow the consumer's transactions to be recorded in order to update the user profile. The transactions of the consumer 20 can be recorded in the user profile to create a database that is potentially of value to providers 70 and others.

At step s16, an advice panel 203 may be displayed to the consumer 20, as illustrated in Figure 3B. The advice panel 203 may be displayed when the consumer 20 controls a pointing device or mouse to hover over the link 201 and also when the consumer 20 control the pointing device to click on the panel. The panel will disappear when the consumer 20 controls the pointing device away from the link. The advice panel 203 can indicate to the consumer 20 that they are logged in, and may also provide information such as the current account balance for the consumer 20, and the price of the content accessed via the link (in the example shown in Figure 3B this is "5m" or 5 millis), and may also provide controls to log off or manage payments.

The consumer 20 may then choose to select the paid resource represented by the link 201, at step s17. Selection of the link 201 may be carried out in a conventional manner, such as by a click of a mouse. At this point, a further check of the account balance in case of any change since it was previously interrogated can be implemented via a request to the transaction server 50 at step s18 and the return of balance information at step s19. If the account balance appears to be sufficient to pay for the resource controlled by the link 201 then the applet operating at the client terminal 10 initiates, at step s20, a payment request which is transmitted to the transaction server 50. The payment request comprises the authentication token and details of the desired transaction.

At this point, a further level of security is enacted, which allows a logged in consumer to control the transactions that are carried out by setting limits. These limits may be in terms of, for example, the quantity of funds that are spent, the time over which the funds are spent, or the rate at which funds are spent over a particular period. That is to say, a consumer can allow a certain volume of transactions to occur before further security checks are needed, or may set the authentication of a previous security check to expire after a certain period of time. Other limits may also be envisaged, such as limits on the types of the transactions which are allowed, or the providers 70 with which transactions are allowed. More complex limits may be envisaged, so that a limit on the value of an individual transaction is variable over a time period, for example. In another example, the consumer 20 may decide to authorise all transactions from a particular provider 70.

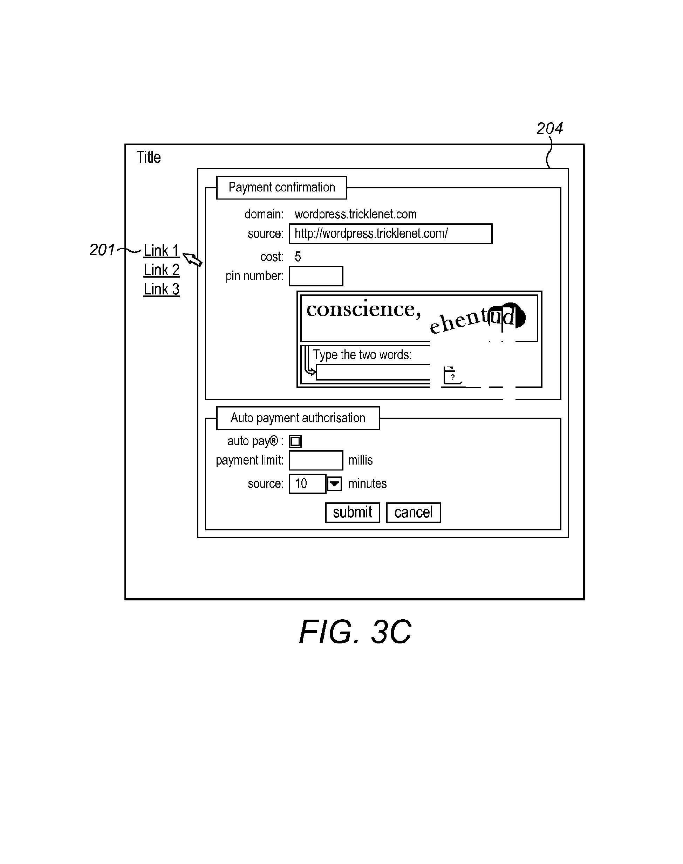

On receiving the payment request, the transaction server 50 undertakes a number of authentication steps. Firstly, the transaction server 50 checks to see if the proposed transaction would fall within the previously agreed limits. This may comprise checking that consumer's 20 authentication is validated (i.e. originates from that participant with the specific IP address using the specific browser and device) and that there is a sufficient balance available in the consumer's 20 account. If this is not the case, the transaction server 50 returns an authorisation panel 204 (see Figure 3C), at step s21, to the client terminal 10. As for the information panel 202 and the advice panel 203, the authorisation panel 204 may be arranged to be displayed when the consumer 20 hovers over the link, and may disappear after a period of time or if the consumer 20 moves the pointing device away from this point. The authorisation panel 204 may require entry of a Personal Identification Number (PIN) and/or other verification and security mechanisms. For example, the authorisation panel 204 may incorporate a CAPTCHA image, requiring user input to demonstrate that the consumer's details have not been appropriated by a third party.

The authorisation panel 204 is displayed to the consumer 20 at step s22, and at step s23 the consumer 20 may enter the PIN and CAPTCHA code to authorise the payment. The consumer 20 may at this point also set further limits for future transactions. For example, the consumer 20 may define that no further authentication will be required until cumulative payments have reached a certain value or until a certain time period has expired. Alternative limits may also be envisaged, such that the consumer 20 may authorise payments relating to a certain internet domain, for example. In this way, the consumer 20 may allow further transactions without the requirement for additional authorisation while being secure that such transactions are not open-ended in terms of payments or time, and also that if others do access their account (for example, if the consumer fails to log out of the client terminal 10 fully at the end of their session) then the risk to the balance in the consumer's 20 account is at least limited. The authorisation entered by the consumer 20 at step s23 is transmitted to the transaction server 50.

Assuming the PIN and CAPTCHA code entered by the consumer 20 are valid, the transaction server 50 then generates an authorisation token. The authorisation token comprises details of the required transaction, such as the cost of the transaction, the location of the desired content, the limits set by the consumer 20 in regard to transactions, and a user identifier. Moreover, in some embodiments the authorisation token may further comprise details of the client terminal 10 such as its IP address, user agent or location (particularly applicable in the case of a mobile device). The authorisation token is then returned to the client terminal 10 at step s24.

In the example described, above, the consumer 20 logs in to the system, sets their authorisation limits, and the authentication and authorisation tokens are issued at the point at which they are required. That is, when the consumer 20 attempts to access premium content. It will be understood, however, that the consumer 20 may choose to carry out these steps in advance, for example by logging in and setting authorisation limits in a dedicated portal. Authentication tokens and authorisation tokens may therefore be delivered to the client terminal 10 in advance of the consumer indicating a desired interaction with the premium content. In this case, the authorisation token will not indicate the desired interaction until it is established but will reflect the authorisation limits set by the consumer 20.

Returning to the method of Figure 2, once the authorisation token has been returned to the client terminal 10, a content request for the premium content is made by the client terminal 10 via the applet operating on it. The content request is transmitted to the content server 40 at step s25 and incorporates both the authentication token and the authorisation token. These tokens may be provided as two distinct items, or may be combined and/or merged into a single token, which may be referred to as a certification token, for transmission at this stage. Before the content server 40 returns the premium content to the client terminal 10, it requests payment by transmitting the content request to the transaction server, at step s26. The transaction server 50 then verifies the payment and implements it by transferring funds from the consumer's 20 account to that of the provider 70 operating the content server 40. The transaction server 50 may also verify that the content server 40 is truly under the control of the particular provider 70 before the transaction is implemented.

The content request can be understood as a transaction request, since it is used to initiate a transaction. In this case, the content request is a payment request as it causes payment by the consumer 20 to another party. The authentication and authorisation tokens can be used to provide security for the transaction. In particular, the transaction server 50 may verify that these tokens are valid before the transaction is implemented. For example, the transaction server 50 may check the authentication and authorisation tokens against records it has retained of the tokens issued to the consumer 20.

Once payment is complete, confirmation of this is returned to the content server 40 at step s27. The confirmation may include, for example, a transaction reference code. The transaction reference code may also be used to retrieve details of the transaction at a later date if required. On receiving the confirmation, the premium content is returned by the content server 40 to the client terminal 10, at step s28, where it can be rendered and viewed by the consumer 20, at step s29.

Confirmation that the transaction has been completed can also be returned to the client terminal 10 and may be incorporated into a confirmation message that may comprise an updated balance for the consumer 20. This updated balance may be displayed to the consumer 20 on the display of the client device 10. For example, the balance may be displayed in a status panel overlaid on the screen of the client terminal 10. In this manner, the consumer is kept informed of the funds in their account. This panel may be viewable at all times when the consumer is logged in to their account, regardless of other information displayed on the screen at the client terminal 10.

Now that the consumer 20 is logged in, they may view further premium content, within the limits they have set, seamlessly, simply by clicking on further links. As long as the limits are not exceeded, steps s21, s22, s23 and s24 do not need to be repeated. In this way, the consumer 20 can navigate premium content, with payments being automatically effected without interrupting the consumer's friction-free browsing experience.

Advantageously, the system described above not only allows consumers 20 to make payment for content (as well as for apps, other goods and services, and so on), but also allows payments into the consumer's account. For example, such payment may be designed to motivate the consumer 20 to take actions desired by the providers 70. In one particular example, where a provider 70 is an advertiser, it may desire the consumer 20 to interact with certain content such as an advertisement, either passively through viewing the content or more actively via certain positive interactions with that content.

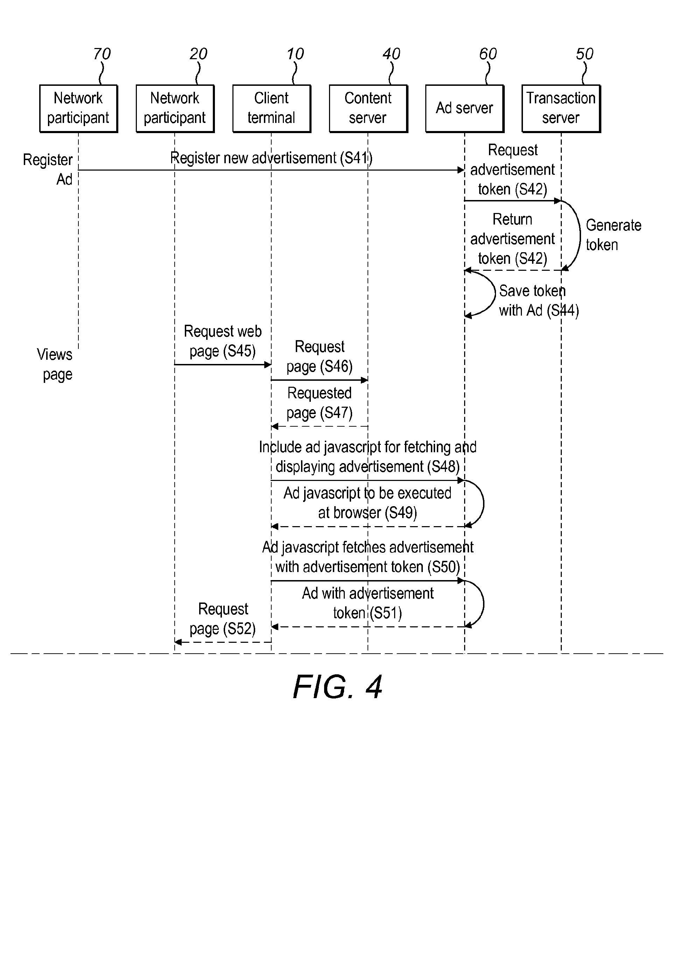

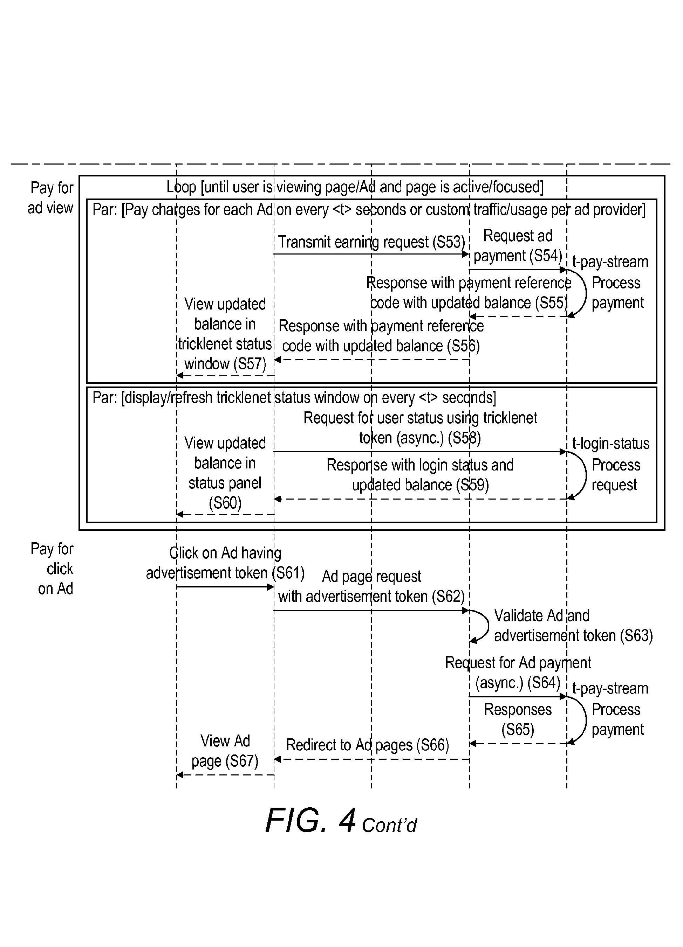

The payment of a consumer 20 for viewing advertisements is illustrated in Figure 4, again using the example of a web browsing experience. In this example, the provider 70 is an advertiser and has an account maintained at the transaction server 50, and, at step s41, registers an advertisement with an ad server 60. As a consequence, the advertisement is stored at the ad server 60 and can be used to populate advertisement fields in web pages provided by other network participants 70 that provide content, such as those associated with the content server 40.

On receiving the advertisement, the ad server 60 requests, at step s42, an advertisement token from the transaction server 50. The transaction server 50 then generates an advertisement token that comprises details of the advertisement, including, for example, details identifying the advertiser, the ad server 60, the URL at which the advertisement is stored, and the intended payment amount for interaction by other network participants with the advertisement. In other embodiments the advertisement token may also comprise details of maximum payments per network participant, display time periods, display time repeats and other similar characteristics. The advertisement token is then returned to the ad server 60, at step s43, where it is stored together with the advertisement, at step s44.

At a later time, a consumer 20 may operate their client terminal 10, at step s45, to navigate to a web page hosted by a content server 40. As is conventional, the browser running at the client terminal 10 will request the page from the content server 40, at step s46, which is then returned at step s47.

The web page includes a reference to an advertisement code such as a JavaScript, HTML5, Flash, MicroSoft Silverlight etc, which is transmitted to the ad server 60 at step s48. The ad server 60 may be arranged to generate an advertisement which is transmitted to the client terminal 10 in step s49. The advertisement comprises the advertisement token (which was generated at step s43). The advertisement code is arranged to detect if a consumer 20 is logged into the network (for example if an authentication token is present on the consumer's 20 client terminal). If the consumer 20 has already been authenticated by the transaction server 50, the advertisement code is arranged to display the advertisement at the client terminal 10.

If the consumer 20 is not logged into the network the advertisement code may be arranged to request the consumer 20 to log in and/or register with the network. In another embodiment the advertising code may be arranged to ignore the network participant 20's log in and/or registration status and/or be arranged to generate further interactions.

If the consumer 20 is logged in, the advertisement code causes the client terminal 10 to request this advertisement together with the advertisement token, at step s50. These are returned to the client terminal 10 at step s51. The advertisement is then displayed to the consumer at step s52.

The advertisement that is chosen may be dependent on the user profile for the consumer 20 stored at the transaction server 50. The user profile may include, for example, a record of user transactions, which may be indicative of the type of advertisement which would be suitable for display to the consumer 20. The provider 70, for example, may have set rules that their advertisement is only to be delivered to consumers 20 having certain types of profiles, or may have set rules regarding the payment amount for consumers 20 with different profile types.

Similarly, the consumer 20 may have set rules regarding the types of advertisements they are willing to receive. For example, the consumer 20 may set a threshold value for payment from an advertisement, meaning that only those advertisements that offer the potential for the consumer 20 to earn above a certain value are provided.

Once the advertisement has been chosen and delivered to the client terminal 10, the client terminal 10 has sufficient information to render the web page, together with the advertisement for viewing by the consumer 20 at step s52. While the web page is viewed by the consumer 20, the consumer 20 may earn funds to be placed in their account from that of the advertiser 70. In order to implement this transfer, an earning request may be sent by the client terminal 10 to the ad server 60, at step s53. The earning request may be sent, for example, every t seconds during which the web page containing the advertisement is in view and is the active window provided by the client terminal 10. The earning request acts as a transaction request in this context.

The earning request sent by the client terminal 10 comprises both the advertisement token identifying the advertisement and an authentication token identifying the consumer 20 operating the client terminal 10. The consumer 20 will have previously logged on in order that the client terminal 10 has access to the authentication token as described above with reference to Figure 2.

The ad server 60 upon receipt of the earning request, in step s54, generates a request to the transaction server 50 to make a payment from the account of provider 70 to the account of the consumer 20. The transaction server 50 can check that the earning request does not exceed a predefined limit for the consumer 20. For example, a consumer 20 may be limited to earning a certain amount by viewing an advertisement within a certain time frame, or may be limited to a maximum earning regardless of time frame or any other constraint.

Assuming these limits are not exceeded, on receiving the earning request, the transaction server 50 applies the necessary adjustments to the balance of the account of the consumer 20 and the account of the provider 70. It is able to identify these accounts, and the changes necessary, through the authentication token and the advertisement token that are incorporated into the earning request. Once payment has been processed in this way, a confirmation message is returned to the ad server 60, at step 55, and then forwarded on to the client terminal 10 at step s56. In another embodiment the earning request could be encrypted and sent directly from the advertisement code operating at the consumer's 20 client terminal 10 to the transaction server 50. In this embodiment similarly the confirmation message could be encrypted and sent directly from the transaction server 50 to the client terminal 10.

The confirmation message may include an updated balance for one or both of the accounts of the provider 70 and the consumer 20. The consumer's updated balance in their account may be displayed to the consumer 20 by the client terminal 10, at step s57. For example, the balance may be displayed in a status panel overlaid on the screen of the client terminal 10. In this manner, the consumer is kept informed of the funds in their account. This panel may be viewable at all times when the consumer is logged in to their account, regardless of other information displayed on the screen at the client terminal 10.

Indeed, there may be provided regular checks of the consumer's 20 account status and balance in order to ensure that the consumer 20 has the most up to date information available. For example, the client terminal 10 may be arranged to request status information from the transaction server 50 at regular intervals. This is reflected in step s58 in Figure 4, at which a status request is made.

The status request comprises the authentication token, allowing the transaction server 50 to identify the relevant account and return status information at step s59. This can then be displayed to the consumer 20 in the status panel, at step s60.

While the above description relates predominantly to consumer interaction with content delivered through a browser, the status panel may itself be used to present transaction opportunities to the consumer. For example, advertisements may be displayed in the status panel. The status panel may be displayed even when the browser operating at the client terminal 10 is closed, and may be customisable by the customer. For example, the customer may be able to set preferences regarding the size of the status panel and the information or transaction opportunities that are presented on it. Where advertisements and other transaction opportunities are presented in the status panel, it will be understood that they are no longer embedded in the provider's 70 web pages.

As well as receiving payment for passively viewing the advertisement, the consumer 20 may receive payment by actively interacting with the advertisement. In one example, again in the context of a web browsing experience, this active interaction may comprise selecting the advertisement with the client terminal's control device.

So, at step s61, the consumer 20 may instruct the client terminal 10 to select the advertisement. This causes a request to be sent to the ad server 60 at step s62 which comprises both an earning request and an ad page request. The earning request comprises both the authentication token and the advertisement token. The ad server 60 then validates the details sent through to it, at step s63.

If these details are validated, the ad server 60 then checks whether payment is permissible to the consumer 20, by checking against pre-defined limits and forwarding the earning request to the transaction server 50. In a preferred embodiment the ad server 60's payment request to the transaction server 50 comprises detailed payment permissions and the transaction server 50 validates whether payment is permissible by checking against the ad server 60's payment request. As described above, a consumer 20 may be limited to earning a certain amount by viewing an advertisement within a certain time frame, or may be limited to a maximum earning regardless of time frame. In other examples, other types of limits may also be envisaged. Assuming the limits are not exceeded, at step s64 transaction server 50 processes the earning request and returns a confirmation response in step s65. This confirmation may be forwarded to the client terminal 10 if desired in order to update a display to the consumer 20 of their current balance.

Once the ad server 60 has received the confirmation response, it can return additional content at step s66. This additional content is that selected by the consumer 20 at step s61. In another embodiment the ad server 60 may be arranged not to await receipt of the confirmation response before providing the content. The consumer 20 views the additional content on the client terminal 10 at step s67.

It will be appreciated that the description above relates to an implementation in which the interface presented to the consumer 20 by the client terminal 10 comprises a cursor, which will typically be controlled by a mouse or other pointing device. The skilled person will understand that other interfaces may be used in conjunction with the present invention. For example, it is increasingly common for mobile devices in particular to make use of touchscreen interfaces. The implementation of the invention may be adapted according to the interface provided. For example, the presentation and interaction with the information panel 202, the advice panel 203 and the authorisation panel may be optimised for the interface used. In the case of a touchscreen, this may mean that the panels are not presented when a cursor hovers over a link but are instead displayed as a result of another interaction, such as selection of the link.

In the above examples, transactions are carried out in the context of web browsing. However, preferred embodiment of the present invention may also be used to carry out transactions in other contexts. For example, a non-browser application may run at the client terminal 10 offering a consumer 20 access to certain features in exchange for payment. In one example, the application may be a game, in which the consumer 20 must pay for each instance in which they play the game. There may equally be more involved models of payment, in which the consumer 20 pays for each level or pays a varying amount through progress of the game, for example.

In this case, the provider 70 is the owner of the application. The provider 70 registers the application with the transaction server 50 and receives a resource token from the transaction server 50. The provider 70 may also provide native program code for incorporation into the application, although in other embodiments application developers may use their own programming code. The resource token and program code are combined with the application in order to facilitate in application payments.

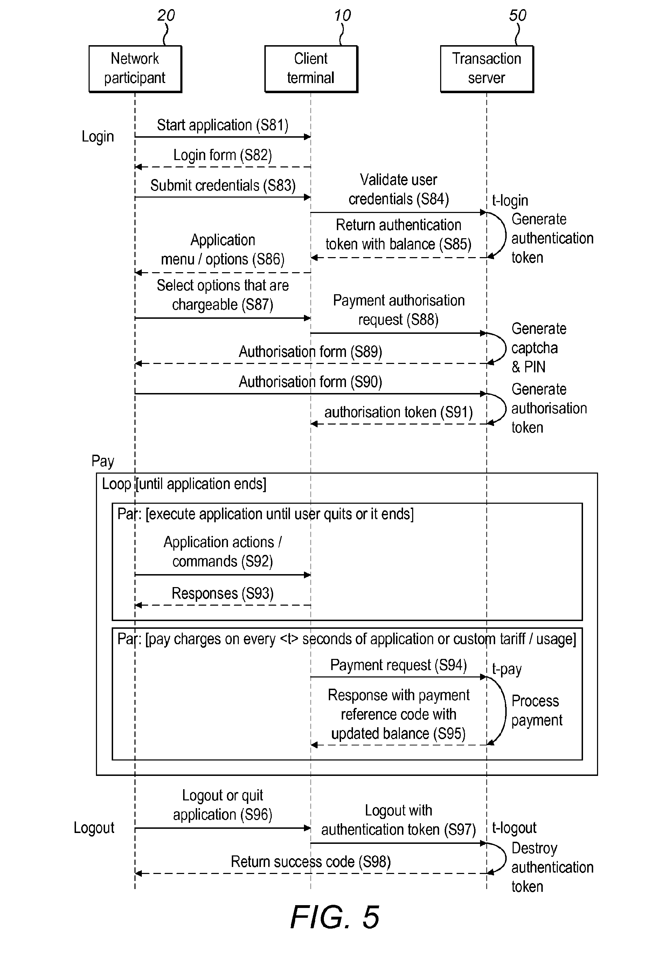

The operation of the system in this context is illustrated in Figure 5. Here, it can be seen that, at step s81, the consumer 20 instructs a client terminal 10 to initiate an application. Once the application is running, a login form is returned to the consumer 20, at step s82, who then enters their details (such as a user name and password) on the client terminal 10, at step s83. In another embodiment the log in process may be performed by a separate dedicated application running on consumer's 20 client terminal 10, and which would manage the log in into many applications which the consumer 20 may wish to run on their client terminal 10.

The client terminal 10 forwards the consumer's 20 credentials to the transaction server 50 at step s84, where they are checked against the records held by he transaction server 50. If the credentials are determined to be valid, then the transaction server 50 generates an authentication token which can be used in future transactions. The authentication token may include details such as the IP address of the client terminal 10, a reference for the application, and an object ID. In general, the token is sufficient to identify the consumer, either directly through the incorporation of user ID or indirectly through the incorporation of some detail which can be associated with a particular consumer.

The authentication token is then returned to the client terminal 10, at step s85. The transaction server 50 also stores a copy of the authentication token for later verification. In preferred embodiments, the authentication token is arranged to be destroyed when the consumer 20 exits the application. This aspect is described in further detail below.

Now that the consumer 20 is logged in, the application operating at the client terminal 10 may present the relevant options to the consumer 20, at step s86. These may include options which require payment by the consumer 20, but may also include options that offer payment to the consumer 20 or for which no transaction is required, or transactions for which no payment is required.

In the example shown in Figure 5, the consumer 20 selects options within the application that are chargeable in step s87. In response the application generates a request for payment authorisation which is transmitted to the transaction server 50 at step s88.

The transaction server 50 generates a response to the application which causes the application to display a payment authorisation panel, which may be similar to authorisation panel 204 described with reference to Figure 3C above. In another embodiment other displays may be used. The authorisation panel is displayed to the consumer 20 at step s89, and at step s90 the consumer 20 may enter the PIN and CAPTCHA code to authorise the payment. The consumer 20 may at this point also set further limits for future transactions. For example, the consumer 20 may define that no further authorisation will be required until cumulative payments have reached a certain value, until a certain time period has expired, until a rate of payment over a defined period t has been exceeded, or until another limit related to the application has been reached. In this way, the consumer 20 may allow further transactions and payments without the requirement for additional authorisation while being secure that such further transactions and payments are not open ended in terms of payments and/or time, and also that if others do access the consumer's 20 account (for example, if the consumer 20 fails to log out of the application fully at the end of their session) then the risk to the balance in the consumer's 20 account is limited. The authorisation entered by the consumer 20 at step s90 is transmitted to the user account and transaction server 50.

Assuming the PIN and CAPTCHA code entered by the consumer 20 are valid, the transaction server 50 then generates an authorisation token. The authorisation token may comprise details of the required transaction, such as the cost of the transaction, the limits set by the consumer 20 in regard to transactions, and a user identifier and application identifier. In another embodiment the authorisation token may also be arranged to make payments across multiple applications operating at the client terminal. The authorisation token is then returned to the client terminal 10 at step s91.

During execution of the consumer's selection, various commands may be entered by the consumer 20 (step s92) and various responses may be provided by the application operating at the client terminal 10 (step 93). These continue as long as the selection is in effect.

During this time, payments are made at certain intervals depending on the configuration of the application and the consumer's 20 interaction with it. Such payments may for example be at regular intervals, or to access certain features of the application, or levels of a game or some other regular or irregular basis. Payments are carried out by transmitting payment requests to the transaction server 50 from the client terminal 10, at step s94. The payment requests comprise the authentication token, the authorisation token (where the authentication and authorisation tokens may be combined into a single certification token) and details of the transaction amount and the receiver of the payment (i.e. the provider 70 associated with the application). Each time the request is received, it is processed by the transaction server 50 and a confirmation message typically including the consumer's new account balance is transmitted to the client terminal 10 at step s95.

When the consumer 20 is finished with the application, a command to log out or exit is transmitted to the client terminal 10, at step s96. A logout request is then forwarded to the transaction server 50 by the client terminal 10 at step s97. The logout request comprises the authentication token. On receiving the logout request, the transaction server 50 deletes its record of the authentication token, so that it may not be used again, and returns a log out completion message back to the consumer, via the client terminal 10, at step s98.

The skilled person will appreciate that particular payment amounts and other details may vary in accordance with the above-described system. Moreover, the specific nature of the content hosted by either the content server 40 or the ad server 60 may also be modified according to requirements. For example, advertisements or aspects of advertisements need not necessarily be hosted on the ad server 60 but may be hosted elsewhere, such as the content server 40. Furthermore, while the transactions described above refer to the initiation of transactions by interaction with a client terminal 10, transactions may also be initiated by other activities. For example, transactions may be initiated automatically by network devices, for example by a meter measuring the consumption of goods, such as fuel, by the consumer 20. This might have particular application in systems in which utilities are provided to the home, allowing payment for gas, electricity, or water to be facilitated through the system by meters or smart appliances that are connected to the network 30.

In some preferred examples of utility payment systems of this kind, communication with the transaction server 50 is not initiated directly from the end user. Instead, a smart meter or similar network-connected device may report usage levels to the utility provider, who will then initiate the transaction process using its own network device. The skilled person will recognise that alternative arrangements and architectures are also possible without departing from the present invention. In particular, the location and distribution of the network participants may vary, as may the network devices used to access the network.

Other variations and modifications will be apparent to the skilled person. Such variations and modifications may involve equivalent and other features which are already known and which may be used instead of, or in addition to, features described herein. Features that are described in the context of separate embodiments may be provided in combination in a single embodiment. Conversely, features which are described in the context of a single embodiment may also be provided separately or in any suitable sub-combination.

It should be noted that the term "comprising" does not exclude other elements or steps, the term "a" or "an" does not exclude a plurality, a single feature may fulfil the functions of several features recited in the claims and reference signs in the claims shall not be construed as limiting the scope of the claims. It should also be noted that the Figures are not necessarily to scale; emphasis instead generally being placed upon illustrating the principles of the present invention.

## Claims

1. A computer-implemented method for facilitating online transactions, comprising:
maintaining a first account for a first network participant;
maintaining a second account for a second network participant;
generating an authentication token associated with the first account;
transmitting the authentication token to a network device;
receiving a transaction request from the network device, wherein the transaction request comprises details of the desired transaction, the authentication token and identifies the second account; and
applying the transaction request to the first and second accounts using the authentication token.

2. A method according to claim 1, wherein the transaction request is a payment request, and wherein the step of applying the transaction request comprises authorising the payment request.

3. A method according to claim 2, wherein authorising the payment request comprises comparison of a payment amount with a balance of the first account.

4. A method according to claim 2 or claim 3, further comprising setting one or more authorisation limits, and wherein authorising the payment request comprises ensuring the payment request does not exceed the authorisation limits.

5. A method according to claim 4, further comprising generating an authorisation token and transmitting the authorisation token to the network device, wherein the transaction request comprises the authorisation token.

6. A method according to claim 4 or claim 5, wherein the authorisation limits comprise at least one of: temporal limits, rate limits and quantity limits.

7. A method according to any one of claims 2 to 6, wherein the payment request is generated in response to selection of a desired interaction and the method further comprises enabling the desired interaction if the payment request is authorised.

8. A method according to claim 7, wherein the application is a browser, a game, or a mobile app.

9. A method according to any one of the preceding claims, wherein the request is an earning request.

10. A method according to claim 9, wherein the earning request is generated in response to interaction of an application operating at the client terminal with content associated with the second network participant.

11. A method according to any one of the preceding claims, further comprising maintaining a user profile for the first network participant, wherein the user profile reflects activity of the first network participant.

12. A method according to claim 11, further comprising updating the user profile in response to the transaction request.

13. A method according to claim 11 or claim 12, wherein the transaction request is a response to one or more transaction opportunities presented to the first network participant in dependence on the user profile.

14. A method according to any one of claims 11 to 13, further comprising sharing at least part of the user profile with the second network participant in response to the transaction request.

15. A system for facilitating online transactions, comprising:
a transaction server arranged to maintain a first account for a first network participant and a second account for a second network participant, the transaction server being further arranged to generate an authentication token for the first network participant;
a network device arranged to receive the authentication token from the transaction server and to generate a transaction request comprising the authentication token and identifying the second account,
wherein, on receipt of a transaction request from the client terminal, the transaction server is arranged to apply the transaction request to the first and second accounts.
